# EUROPEAN PATENT APPLICATION

(11) **EP 1 679 179 A1**
(43) Date of publication of application: **12.07.2006**
(21) Application number: 03753607.5
(22) Date of filing: 02.10.2003
(51) Int. Cl.: B29C 51/20

(54) **PROGRESSIVE MACHINE WHICH IS USED TO PRODUCE CONTAINERS AND RELIEFS USING A THERMOFORMABLE FLEXIBLE OR SEMI-RIGID FILM, COMPRISING ONE OR MORE LAYERS AND IMPRINTS ON THE UPPER COVER AND SIDES THEREOF**

(71) Applicant: Martinez Sampedro, Angel Javier, 26 140 Lardero, La Rioja (ES)
(72) Inventor: Martinez Sampedro, Angel Javier, 26 140 Lardero, La Rioja (ES)
(74) Representative: Urizar Anasagasti, José Antonio
(86) International application number: PCT/ES2003/000501
(87) International publication number: WO 2005/030471

(57) **Abstract**

The invention relates to a progressive machine which is used to produce containers and reliefs using a thermoformable flexible or semi-rigid film, comprising one or more layers (multilayered) of same- or different-type pieces of expanded or non-expandable material, in which ink imprints are made on the upper cover and sides of the container. In this way, any unit or device comprising the multi-functional machine is provided with innovative features, such that a high level of quality can be obtained in relation to the product produced.

## Description

### Object of the invention

The object of the present invention, as expressed in the title of the present description, relates to a machine for producing or carrying out containers and reliefs on thermoformable flexible or semi-rigid film comprising one or more layers, and imprints on the upper cover and sides thereof, thus obtaining with its innovative process a number of functions with an optimal degree of quality.

### Background of the invention

Within the field of container production, there exists a great diversity of machines or procedures on the market for producing the different containers demanded in the marketplace, these being of very different shapes, designs and sizes. The devices for said production use machines or systems in separate phases, thereby increasing the price of the product required.

The description of the present invention, related to the machine for producing containers, provides a number of new features to a process in which said machine carries out different, innovative functions in order to obtain a complete container on film-like material with one or more layers and relief prints on the top cover and side surfaces, within the continuous process that the container machine carries out.

### Description of the invention

The machine for producing containers and reliefs on thermoformable flexible or semi-rigid film, also having one or more layers (multilayer), as well as printing on the side surfaces of the container produced.

The machine for producing containers and reliefs from thermoformable film is made up of the following equipment: 1. The coil-carrier axes. 2. The pre-unwinding unit. 3. The pre-heating unit. 4. The moulding unit. 5. The soldering and sealing unit. 6. The ink printing unit. 7. The thermal printer. 8. The lengthways cutting unit. 9. The crossways cutting unit. 10. The vacuum and inert gas injection unit. 11. The processing area. 12. The double traction motor unit. 13. The uva ray unit. 14. The ozone gas production unit. 15. The control panel, and 16. The control cubicle.

In its general configuration the machine has a basic or fundamental structure, which is made up of a set of screwed-together profiles, by way of channels on their outer surface and that facilitate perfect positioning of the same, thus providing the basis of the machine or support surface with a rectangular shape, which facilitates optimising the processes carried out by the machine with a high degree of quality. This allows for a vertical support to be fixed onto the mid-point of its lengthways axis, over which two free articulated arms rotate together, at one of its ends and onto which the control panel is held, which rotates upon itself according to its vertical axis, the vertical support and articulated arm acting together in order to conduct the electrical and pneumatic lines of the control cubicle to the control panel.

At the end of the machine opposite to the product (container) output, finished and perfectly levelled with respect to the processing zone is located the flexible or semi-rigid film coil, with one or more layers of extracts of the same or different nature, of expandable or non-expandable material, on a displaceable axis, on which two adjustment units act in order to position the coil horizontally and vertically in accordance with the processing area.

In cases in which the film to be thermoformed should have a low index of elasticity, the unwinding of the film is not carried out directly by the pull of the chains of the motor unit in order to avoid rapid disadjustment of the same and wrinkles on the unwound surface, but rather a pre-unwinding is carried out previously, being the chains of the motor unit those that have the function of transporting the film to the processing area.

The pre-heating unit acts upon the perfectly spread and stretched out film, in which cases the film to be thermoformed should thus require, and the moulding unit that provokes film thermoformation according to the units to be produced by applying on the same the appropriate pressure and heat.

On the centre of the lengthways axis of the machine and on a plane vertical to it and above the processing area an expandable coil carrier is situated, with a coil positioner over the same, as well as a rotation speed control. The film that makes up the lids of the containers is extended in a uniform manner through the action of the tensor, which acts through gravity across the width of the same, moving over the mouths of the containers once filled with the product to be packaged, in order to be sealed and apply the heat and graphic prints.

In the process of producing the containers, and in the cases in which the degree of hygiene should so require, as well as at the stage or stages that each process should require, a number of units such as the vacuum unit, the inert gas injection unit, an uva ray barrier and an ozone gas injector.

In the machine functioning sequence, the ink printing unit works in several stages, the first being the one where the printer ribbon advances by way of the motorisation roller and pneumatic control with a single rotation direction, lacking any articulated parts so as to avoid adjustment and expensive maintenance.

In the sealing, moulding and cutting units, in which a fixed and a mobile part are involved, the latter moving above the former, conventional systems are substituted in order to change the accessories of the fixed part, thus making the fixed part collapsible onto one of its sides and positioning it with hydraulic damping, thus avoiding high costs as well as delicate and long lasting jobs.

The machine for producing containers and reliefs on thermoformable film shows perfectly parallel cutting, sealing and moulding units, this feature also characterising the fixed and mobile parts of the set of units, by acheiving a uniform movement of the mobile part, since the displacement movement carried out by the pneumatic cylinder is transmitted to a system of two-by-two articulated rods, where the bearings situated at the ends of the pins that join said rods move under precise guidance within windows carved in the steel walls that make up the structure of the body of said unit.

In the final process that the machine for producing containers, the lengthways and crossways cutting functions combine in an appropriate manner, cutting the sets of containers according to the work plan programmed, being produced upon movement towards the opposite end from the process starting point.

### Brief description of the drawings

So as to provide an improved understanding of the machine for producing containers and reliefs using a thermoformable flexible or semi-rigid film, comprising one or more layers, as well as carrying imprints on the upper cover of the container and on its side surfaces, in the present invention a realisation of illustrations based on the most significant components that make up said machine based on the attached figures.

Fig. 1 shows a raised lengthways and raised lateral view of the machine for producing containers and reliefs using a thermoformable flexible or semi-rigid film, comprising one or more layers, as well as carrying imprints on the upper cover of the container and on the side surfaces thereof, where the control arm (1), the lower unwinder (2), the upper positional cubicle (3), the coil support (4) and the lengthways profiles (5) are shown, as well as a section of the same (5.1), and the upper unwinder (6).

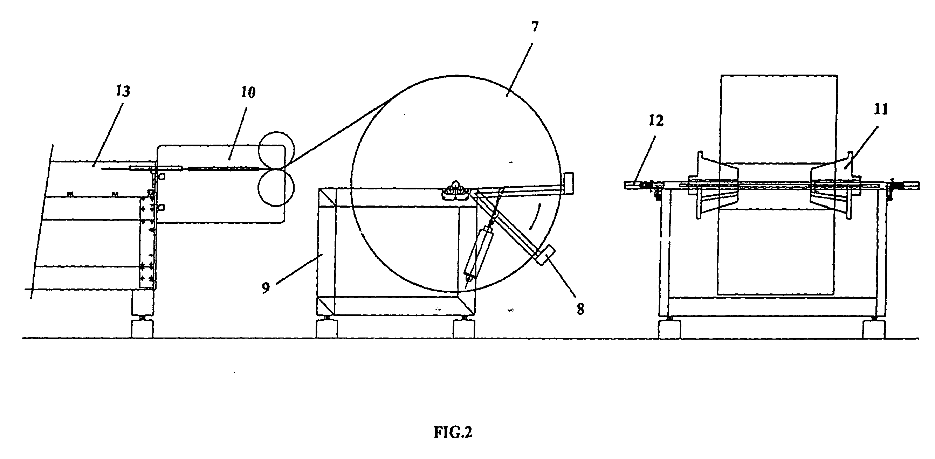

Fig. 2 shows a raised lengthways and raised lateral view of the large coil unwinder, where the coil (7), the elevator system (8), the coil, the unwinder support (9), the guidance system (10), the support cones (11) and the coil support axis (12) are shown.

Fig. 3 shows a plan view of the pre-heating area of the container producing machine, where the resistors (14), the anti-tack plates (15), the impulser cylinder (16), elevator cylinder (17) and the guide pin (18) are shown.

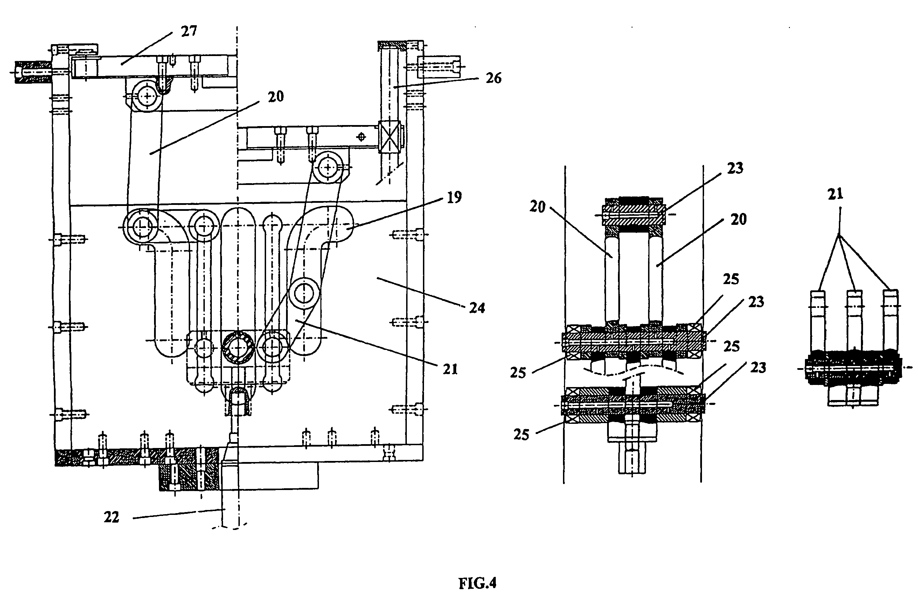

Fig. 4 shows a raised section view of the thermo-soldering set, as well as some sections of the set of rods and their assembly, where the windows (19) in the guide plate, the upper rod (20), the lower rod (21), the impulser cylinder (22), joining pins (23), guide plate (24), wheel arrangement (25), guide pins (26) and mobile plate (29) are shown.

Fig. 5 shows a raised section view of the transmission-chain set, where the motor (28), lower film (29), front pinions (30), motor pinion (31), back pinions (32) and chain drag pinion (33) are indicated.

Fig. 6 shows a raised section view of the support guide chain set, where the interior chain guide (34), exterior chain guide (35), guide support (36) and film (37) are indicated.

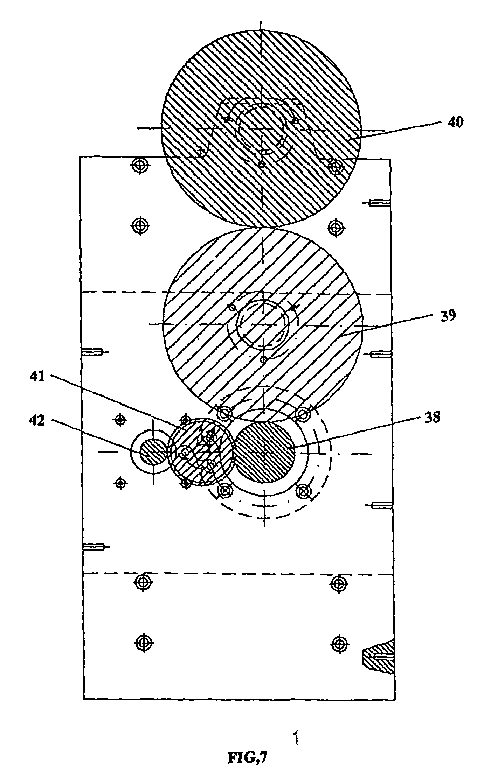

Fig. 7 shows a detailed section view of the back transmission part, where the motor pinion (38), the intermediate pinion (39), the upper pinion (40), as well as the intermediate pinions (41) and (42) are shown.

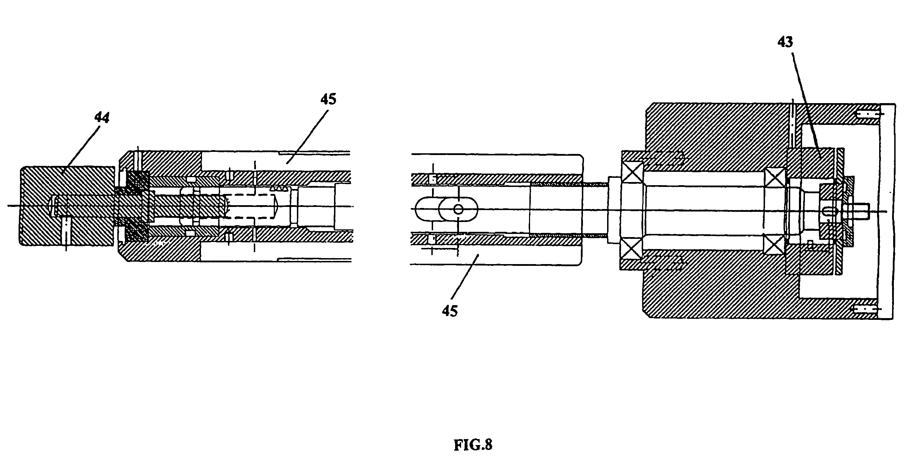

Fig. 8 shows a lengthways sectioned view of the expandable axis, where the electrobrake (43), the centring stick (44), and the expandable key (45) are shown.

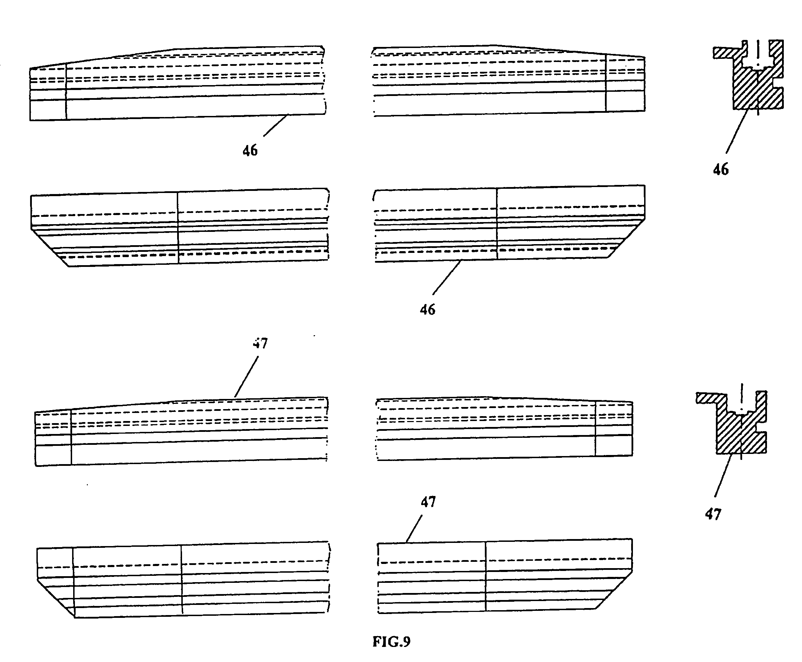

Fig. 9 shows a plan lengthways view, raised and sectioned, of the guide-chains, where the interior chain guide (46), and the exterior chain guide (47) are shown.

Fig. 10 shows a view of the set that makes up the chain, where the toothed par (48), the chain (49), the spring (50) and the closure clip (51) are indicated.

### Preferred embodiment of the invention

The machine for producing containers and reliefs using a thermoformable flexible or semi-rigid film, comprising one or more layers (multilayered) of same- or different-type pieces of expanded or non-expandable material, in which ink imprints are made on the upper cover and sides of the container.

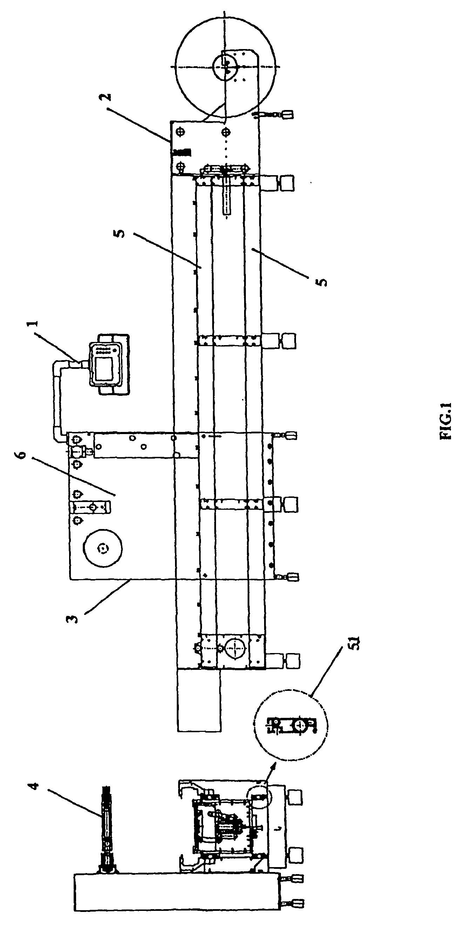

The machine is made up of a set of units and equipment including: the coil-carrier axes, the pre-unwinding unit, the pre-heating unit, the moulding unit, the soldering and sealing unit, the ink printing unit, the thermal printer, the lengthways cutting unit, the crossways cutting unit, the vacuum and inert gas injection unit, the processing area, the double traction motor unit, the uva ray unit, the ozone gas production unit, the control panel, and the control cubicle, as shown in Fig. 1.

The machine has a structure made up of lengthways profiles with channels along all of its length where the screws for fixing it are positioned, alternating sheets of synthetic material among the same without carrying out mechanization, thus facilitating the affixation of different related components for controlling the different operations, both pneumatic and electrical, for the functioning of the entire assembly of equipment of the machine, the resulting structure having a light weight, easy assembly, low vibration rates in its operation and low cost.

Within the structure of the aforementioned profiles, conducts run along its length for the distribution of electrical and pneumatic energy from the control cubicle to the different sections of the machine. This electrical and pneumatic supply system, due to its innovative characteristics, provides high reliability, durability and simplicity to the assembly set, since it avoids the use of pneumatic hose straps and sets of electrical wiring.

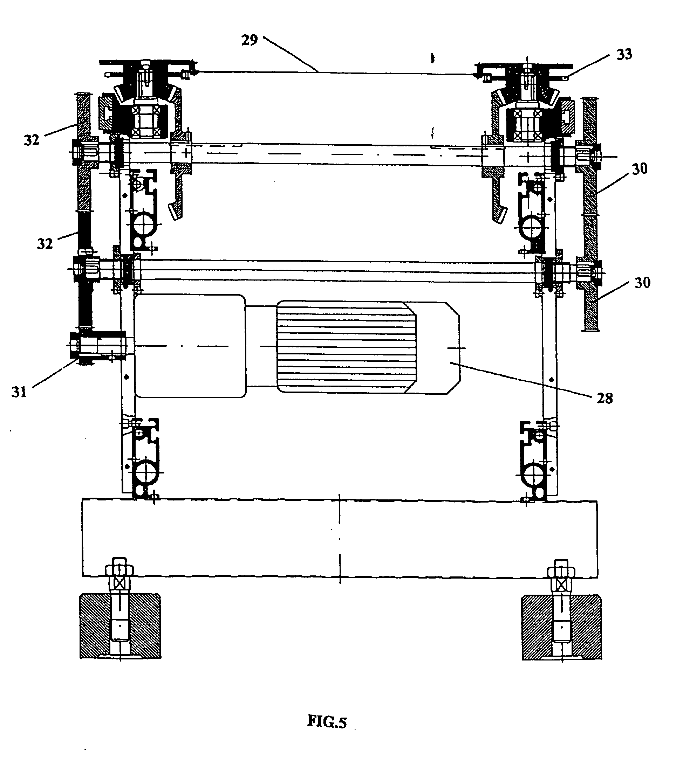

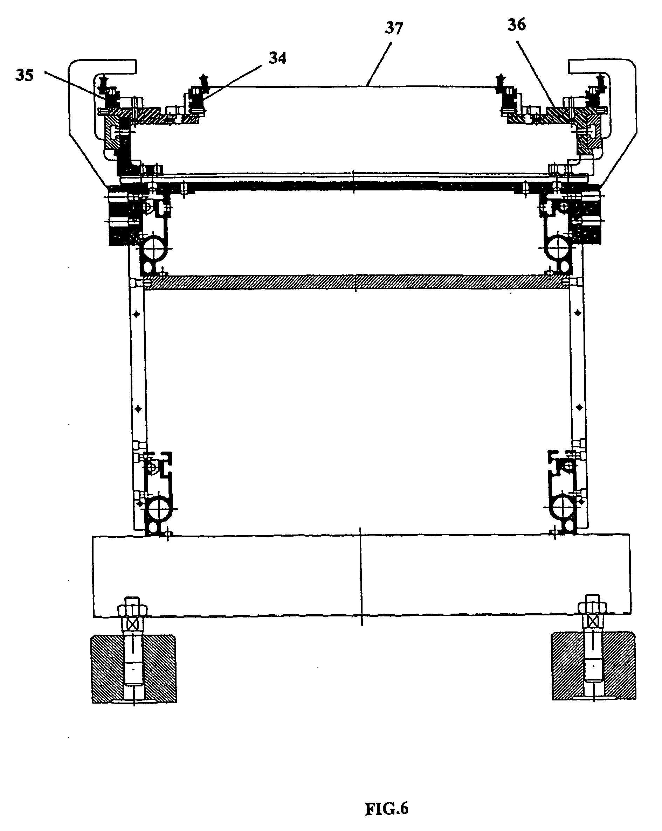

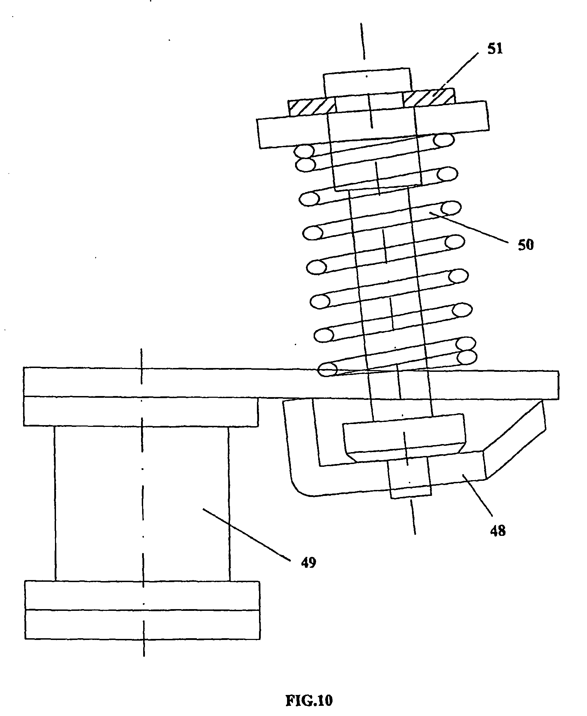

The equipment of the set of drag the pinion and chain drag axis, as shown in Figs. 5, 6 and 10, receives motor force through its two ends due to its innovative design, thus achieving synchronisation in the movement of the chains and uniform displacement of the film while preventing wrinkles and folds.

The film braking system is safe and uniform throughout every point of its transversal axis, composed of two laminated parts, one mobile and the other fixed, between which the film slides. The mobile part advances parallel to the fixed one, perfectly guided, where the synthetic material that covers the friction surface comes to a safe and uniform halt, without creating wrinkles or folds on the film surface.

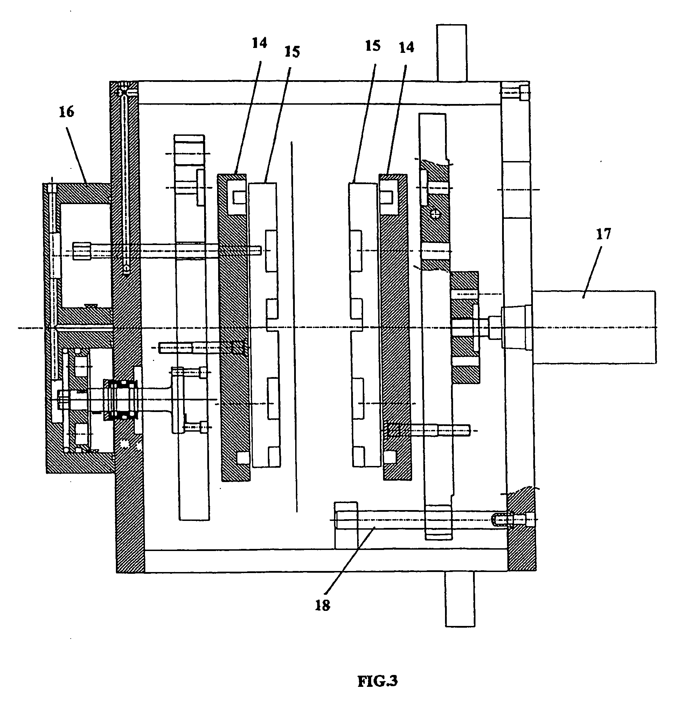

Within the assembly the machine is provided with an innovative piece of equipment where the pre-heating unit for the film to be thermoshaped is located, according to Fig. 3, showing the resistors, the anti-tack plates, the impulser cylinder, the elevator cylinder and the guidance column.

The displacement of semi-rigid film to the processing zone is carried out in the following stages.

The pre-unwinding unit unwinds the film once the brake of the rotation axis of the coil unlocks it and leaves it free to rotate, being immobilised again by the action of its brake.

The unwound film is pulled by the drag chains of the motor unit to the processing zone in an operation lacking extraordinary stretching and perfectly controlled to prevent wrinkles and folds, due to the action of a brake made up of sheets that immobilises the displaced film in the processing area and the semi-rigid film coil, thus maintaining the film in working tension.

The break of the rotation axis of the coil leaves it free in order for it to rotate by the action of the pre-unwinding unit, this being what carries out the rough or wearing work, leaving the operation in precision to displace the film to the working or processing area, as well as the guidance of the drag chains, thus obtaining optimal reliability in the operation without wrinkles or folds and preventing premature disadjustment of the same, the simultaneousness of the film treatment operation in the processing zone and the unwinding in the displacement of the film to the processing unit being an advantage since it saves time in the machine's operations.

The blade-carrier axis for lengthways cutting is transported towards the centre of the lengthways axis of the machine, thus allowing the lengthways cutting stage to be advanced, which is an innovative aspect incorporated in the container producing machine, thereby cutting the film when taught and with a perfectly straight contour.

The machine, in its working process, allows the mobile module to move in the moulding, soldering and crossways cutting units, thus obtaining perfect parallelism with the fixed module by transmitting the movement created by the pneumatic cylinder to the set of interlaced rods with the pins that include the wheel assembly at their ends, these being transported along the channels formed in the steel walls of the soldering, moulding and cutting units, transmitting this perfectly linear movement to the mobile module, thereby obtaining an optimal degree of quality in the functioning of said units.

The container production machine is provided with a hinged system on one of the sides with greater length of the fixed modules, thus allowing a collapsible movement regulated by the hydraulic dampers and on the moulding, soldering cutting and thermo printing units of the film, thus preventing the displacement of this fixed module, in order to carry out modifications as well as the risks of a unit exposed to heat and to the weight of some modules within the working assembly.

The container production machine coordinates the movements of the crossways and lengthways cutting operations so that the product being processed in these operations should have rounded contours, without sharp edges that could cut the machine operators or the workers manipulating said manufactured product and thus prevent them from being scratched during packaging operations.

The ink printer within the machine system works in a vertical position in the processing area or upper horizontal plane, since it possesses a slowing unit for the advancement of the film to be printed, as well as a linear film tensor that makes the film advance forming perfectly uniform planes with a high degree of quality of the figures printed, all this being carried out by way of a uniformly linear movement of the mobile module of said unit upon its displacement within the four guides and being maintained constantly parallel with the fixed module, which guarantees the quality of the print.

The container production machine is provided with an UVA ray barrier, and ozone gas, positionable depending on the product to be produced.

Said machine is equipped with a unit for creating a vacuum in the containers produced and a unit for injecting the appropriate inert gas in each case.

The drag chain tensors are outside the structure of the machine and symmetrically opposite to the motor axis with respect to the centre of the lengthways axis of the same, by way of sliding units fixed onto the outer face of the structure, thereby facilitating adjustment of the tension of the chains without stopping the machine, and therefore without stopping the thermoforming, sealing, cutting and printing process.

The machine is provided with a cubicle divided into two compartments, along a vertical axis, on whose back wall a support is fixed in vertical position upon whose upper end two arms, articulated together, rotate, on whose free end the control panel is fixed, rotating on its vertical axis, and receiving from the upper level of the control cubicle the electrical leads and from the lower level the pneumatic ones, the control panel having the capacity for movement throughout the entire processing area in order to follow all the operations being carried out.

On its outer assembly the machine is provided with a number of lids, including closure accessories and transport means, with a removable, transparent cover on an upper plane, parallel to the processing area.

The machine for producing containers and reliefs using a thermoformable flexible or semi-rigid film, comprising one or more layers (multilayered) of same- or different-type pieces of expanded or non-expandable material, in which ink imprints are made on the upper cover and sides of the container, incorporates a number of innovations in all of its processes, such as its multifunction features, easy assembly and operation, silent functioning and solidity of the assembly, all of which make it innovative and distinct from those existing on the market.

Having sufficiently described the nature of the present invention, as well as a way of putting it into practice, it is stated that the previously expressed description can be altered in its details, as long as such modifications do not alter its fundamental principles, being what constitutes the essential features of the invention disclosed, the applicant reserving the right to obtain the corresponding certificates of additional improvements or optimisation that may be observed to be recommended based on practice, claiming as exclusive the rights to the following particularities upon which the concession of the invention patent privileges requested, according to the claims stated below.

## Claims

1. Progressive machine for producing containers and reliefs using a thermoformable flexible or semi-rigid film, comprising one or more layers (multilayered), in which ink imprints are made on the upper cover and sides of the container, made up of a number of units and pieces of equipment including the following: the coil-carrier axes, the pre-unwinding unit, the pre-heating unit, the moulding unit, the soldering and sealing unit, the ink printing unit, the thermal printer, the lengthways cutting unit, the crossways cutting unit, the vacuum and inert gas injection unit, the processing area, the double traction motor unit, the uva ray unit, the ozone gas production unit, the control panel, and the control cubicle, thus achieving an innovative process that improves the quality of the container to an optimal level with its innovative multifunctions.

2. Progressive machine for producing containers and reliefs using a thermoformable flexible or semi-rigid film, comprising one or more layers (multilayered), in which ink imprints are made on the upper cover and sides of the container according to claim 1, **characterised in that** it has a structure made up of lengthwise profiles with channels along their entire lengths, positioning the screws for its fixations, alternating sheets of synthetic material, which together facilitate the fixing of the different related components for controlling the different electrical and pneumatic operations, with a low vibration level in its functioning.

3. Progressive machine for producing containers and reliefs using a thermoformable flexible or semi-rigid film, comprising one or more layers (multilayered), in which ink imprints are made on the upper cover and sides of the container according to claim 2, **characterised in that** within the structure of the profiles are located conducts throughout their entire length for the distribution of the electrical and pneumatic energy from the control cubicle to the different positions, in order to carry out the process without the use of straps and blocks of electrical wiring.

4. Progressive machine for producing containers and reliefs using a thermoformable flexible or semi-rigid film, comprising one or more layers (multilayered), in which ink imprints are made on the upper cover and sides of the container according to claim 1, **characterised in that** the equipment of the assembly of the pinion and chain drag axis receives motor force at one of its ends, thereby achieving synchronisation in the movement of the chains and uniform displacement of the film without wrinkles or folds.

5. Progressive machine for producing containers and reliefs using a thermoformable flexible or semi-rigid film, comprising one or more layers (multilayered), in which ink imprints are made on the upper cover and sides of the container according to claim 1, **characterised in that** the brake system of the film is composed of two laminated parts, one mobile and the other fixed, between which the film is displaced. The mobile part advances parallel to the fixed one, perfectly guided, where the synthetic material that covers the friction surface comes to a safe and uniform halt, without creating wrinkles or folds on the surface of the film.

6. Progressive machine for producing containers and reliefs using a thermoformable flexible or semi-rigid film, comprising one or more layers (multilayered), in which ink imprints are made on the upper cover and sides of the container according to claim 1, **characterised in that** the pre-heating unit is made up of uniformly sequential resistors, anti-tack plates and impulser and elevator cylinder, as well as the guide pin.

7. Progressive machine for producing containers and reliefs using a thermoformable flexible or semi-rigid film, comprising one or more layers (multilayered), in which ink imprints are made on the upper cover and sides of the container according to claim 1, **characterised in that** the displacement of the semi-rigid film to the processing area is carried out in several stages. The pre-unwinding unit carries out the unwinding once the brake of the rotation axis of the coil unlocks it and leaves it free to rotate, being left immobilised again due to the action of the brake. The unwound film is pulled by the drag chains of the motor unit to the processing area, this operation avoids extraordinary stretching and is perfectly controlled so as to prevent wrinkles and folds, a sheet brake acting between the processing area and the coil of the semi-rigid film that immobilises the displaced film, maintaining it in working tension. The rotation brake of the coil leaves the pre-unwinding unit free for rotation without sudden or wearing work, thereby obtaining optimal reliability of the film treatment operation in the processing area, and film unwinding and displacement.

8. Progressive machine for producing containers and reliefs using a thermoformable flexible or semi-rigid film, comprising one or more layers (multilayered), in which ink imprints are made on the upper cover and sides of the container according to claim 1, **characterised in that** the blade-carrier axis of lengthways cutting is displaced towards the centre of the lengthways axis of the machine, thereby permitting the advancement of the lengthways cutting stage, achieving the cut with the film taught and with a perfectly straight contour.

9. Progressive machine for producing containers and reliefs using a thermoformable flexible or semi-rigid film, comprising one or more layers (multilayered), in which ink imprints are made on the upper cover and sides of the container according to claim 1, **characterised in that** in its working process the machine allows movement of the mobile module in the moulding, soldering and crossways cutting units, thereby obtaining perfect parallelism with the fixed module by transmitting the movement created by the pneumatic cylinder to the set of interlaced rods with the pins that include a wheel arrangement at their ends that facilitates their movement along the channels made in the steel walls of the soldering, moulding and cutting units, transmitting this perfectly linear movement to the mobile module with an optimal degree of quality.

10. Progressive machine for producing containers and reliefs using a thermoformable flexible or semi-rigid film, comprising one or more layers (multilayered), in which ink imprints are made on the upper cover and sides of the container according to claim 1, **characterised in that** the machine is provided with a hinged system on one of the sides of longer length of the fixed modules, thus permitting a collapsible movement regulated by hydraulic dampers on the moulding, soldering, cutting and thermo printing, preventing the displacement of this fixed module when modifications are carried out.

11. Progressive machine for producing containers and reliefs using a thermoformable flexible or semi-rigid film, comprising one or more layers (multilayered), in which ink imprints are made on the upper cover and sides of the container according to claim 1, **characterised in that** the machine coordinates the trajectories of the crossways and lengthways cutting operations so that the product that is processed should have rounded contours without sharp edges.

12. Progressive machine for producing containers and reliefs using a thermoformable flexible or semi-rigid film, comprising one or more layers (multilayered), in which ink imprints are made on the upper cover and sides of the container according to claim 1, **characterised in that** the ink printer works in a vertical position in the processing area or upper horizontal plane, due to having a unit for the slow-down of the advancement of the film to be printed, as well as a linear tensor of the film that makes the film advance forming perfectly uniform planes, with a high degree of quality of the prints, all this being carried out in a uniformly linear movement of the mobile module of said unit, upon its displacement among the four guides and maintaining the parallelism with the fixed module constant.

13. Progressive machine for producing containers and reliefs using a thermoformable flexible or semi-rigid film, comprising one or more layers (multilayered), in which ink imprints are made on the upper cover and sides of the container according to claim 1, **characterised in that** the machine is provided with a barrier of uva rays and of positional ozone gas depending on the product to be manufactured, in addition being equipped with a unit that creates a vacuum in the containers produced and another unit for injecting the appropriate inert gas in each case.

14. Progressive machine for producing containers and reliefs using a thermoformable flexible or semi-rigid film, comprising one or more layers (multilayered), in which ink imprints are made on the upper cover and sides of the container according to according to claim 1, **characterised in that** the tensors of the drag chains are outside the structure of the machine and symmetrically opposed to the motor axis with respect to the centre of the lengthways axis of the same, and by way of sliding units fixed to the outer face of the structure facilitating the adjustment of the tension of the chains without stopping the machine and as a consequence without stopping the thermoforming, sealing, cutting and printing processes.

15. Progressive machine for producing containers and reliefs using a thermoformable flexible or semi-rigid film, comprising one or more layers (multilayered), in which ink imprints are made on the upper cover and sides of the container according to claim 1, **characterised in that** the machine has a cubicle divided into two lateral compartments on whose posterior wall a support is fixed in a vertical position and on the upper end two articulated arms rotate together, on whose free end the control panel is situated, which turns on its vertical axis and receives from the upper level of the control cubicle the electrical lines and from the lower level the pneumatic ones, the control panel carrying out the movement in the entire processing area.

16. Progressive machine for producing containers and reliefs using a thermoformable flexible or semi-rigid film, comprising one or more layers (multilayered), in which ink imprints are made on the upper cover and sides of the container according to claim 1, **characterised in that** the machine has a number of lids with opening and closing accessories, as well as supports for transport with a removable, transparent cover on its upper plane, parallel to the processing area.
